# EUROPEAN PATENT APPLICATION

(11) **EP 4 338 595 A1**
(43) Date of publication of application: **20.03.2024**
(21) Application number: 23197652.3
(22) Date of filing: 15.09.2023
(51) Int. Cl.: A23D 7/005, A23J 3/22

(54) **ANIMAL FAT ANALOGUE**

(30) Priority: 16.09.2022 EP 22382862
(71) Applicant: Libre Foods Biotech, S.L., 08020 Barcelona (ES)
(72) Inventor: Fletcher, Ronald, 08037 Barcelona (ES); Real Tortosa, Maria, 08201 Sabadell (ES); Fernandez, Clara, 28005 Madrid (ES)
(74) Representative: Curell Suñol S.L.P.

(57) **Abstract**

Provided herein is an animal fat analogue comprising an oleogel composition. Embodiments of the oleogel composition include a continuous gel phase comprising water, starch, konjac gum, and either carrageenan or agar-agar. Embodiments of the oleogel composition also include a discontinuous oil phase. The animal fat analogue may be included in a meat analogue product.

## Description

### BACKGROUND

The consumption of processed meat products is associated with cardiovascular diseases and health problems such as obesity and hypertension. In addition, numerous studies point to livestock production as one of the main causes of climate change and as having a detrimental effect on biodiversity. The impact created in the ecosystem by animal products can significantly exceed those of plant substitutes, to the extent that meat, aquaculture, eggs and dairy products use a disproportionate share of the world's cropland in relation to their nutritional contributions.

There exists a need for animal meat and fat analogues to create a more sustainable and healthy food supply. Oleogels-compositions in which oil droplets are dispersed in a gel matrix-have been used as animal fat substitutes. However, oleogel compositions may become unstable under conditions used to cook foods. There exists a need for animal fat analogues that provide a solid fat low in saturated fatty acids with good cooking properties.

### SUMMARY

Provided herein are animal fat analogue, muscle analogue, and meat analogue compositions and production methods that meet the needs described above. Compositions described herein have advantageous health, taste, texture, and stability properties.

One object of the invention is a composition comprising: (a) a continuous phase comprising water, a starch source, and non-starch polysaccharide source; and (b) a discontinuous oil phase comprising aa oil. In some preferred embodiments, the continuous phase is a continuous gel phase. In some preferred embodiments, the composition is an oleogel. Preferably the composition is a fat analogue oleogel that, preferably, forms a fat analogue layer. In some preferred embodiments, the oil phase comprises no more than 20% by weight of the composition and, more preferably, the oil phase comprises from 5 to 20% by weight of the composition. Preferably, the oil phase comprises a vegetable oil and more preferably the vegetable oil comprises olive oil. Preferably the oil phase comprises no more than 5% saturated lipids by weight of the oil phase. In some preferred embodiments, the non-starch polysaccharide source is 0.5 to 4% by weight of the composition. In some preferred embodiments, the non-starch polysaccharide source is one source of the group formed by agar-agar, konjac gum, carrageenan, alginate and mixtures thereof. In some preferred embodiments the non-starch polysaccharide source comprises two or more non-starch polysaccharides, and preferably consists of two non-starch polysaccharides. In some preferred embodiments, the non-starch polysaccharide source comprises konjac gum and carrageenan and, preferably, the konjac gum and carrageenan together comprise up to 4% of the composition. In some preferred embodiments, the ratio of konjac gum to carrageenan is in the range of 0.5 to 2. In other preferred embodiments, the non-starch polysaccharide source comprises konjac gum and agar-agar where, preferably, the konjac gum and agar-agar together comprise up to 4% of the composition and/or the ratio of konjac gum to agar-agar is in the range of 0.5 to 2. In other preferred embodiments, the non-starch polysaccharide source comprises alginate where, preferably, the alginate comprises up to 4% of the composition. In some preferred embodiments, the starch comprises 1 to 15% by weight of the composition. Preferably the starch is tapioca starch or corn starch. In some preferred embodiments, the water is 70 to 90% by weight of the composition. In some preferred embodiments, the composition further comprises salt and, preferably, the salt is 0.01 to 2% by weight of the composition. In some preferred embodiments, the composition comprises 75 to 90% water, 5 to 20% vegetable oil, 1 to 15% starch, 0.5 to 4% carrageenan, 0.5% to 4% konjac gum, and 0.01 to 2% salt.

Another object of the invention is a meat analogue comprising any of the compositions described above, which may be oleogel compositions. In some preferred embodiments, the meat analogue comprises an animal fat analogue layer comprising any of the compositions described above, including, for example, oleogel compositions. Preferably the meat analogue further comprises a muscle analog layer. In some preferred embodiments, the muscle analogue layer comprises mushroom and, preferably, the mushroom is fresh mushroom. Preferably the mushroom is 20 to 30% by weight of the muscle analogue layer. In some preferred embodiments, the mushroom is homogeneously blended in the muscle analogue layer. In some preferred embodiments, the muscle analogue layer further comprises one or more protein sources where, preferably, the one or more protein sources comprise textured protein and, more preferably, the textured protein is textured pea protein. In some preferred embodiments, the one or more protein sources comprise potato protein. In some preferred embodiments, the one or more protein sources collectively comprise about 8 to 20% by weight of the muscle analogue layer. In some preferred embodiments, the muscle analogue layer further comprises a starch source where, preferably the starch source comprises tapioca starch, corn starch and mixtures thereof. In some preferred embodiments, the starch source comprises 10 to 20% of the muscle analogue layer. In some preferred embodiments, the muscle analogue layer further comprises a non-starch polysaccharide source where, preferably, the non-starch polysaccharide source is one of the group formed by konjac gum, carrageenan and mixtures thereof. In some preferred embodiments, the non-starch polysaccharide source comprises konjac gum and carrageenan. In some embodiments, the non-starch polysaccharide source collectively comprises 2 to 5% of the meat analogue layer. In some preferred embodiments, the muscle analogue layer further comprises one or more oils. In some preferred embodiments, the one or more oils are emulsified in the meat analogue layer. In some preferred embodiments, the one or more oils comprise olive oil. In some preferred embodiments, the one or more oils comprise 4 to 10% of the muscle analogue layer. In some preferred embodiments, the muscle analogue layer further comprises salt where, preferably the salt comprises 0.1 to 4% by weight of the muscle analogue layer. In some preferred embodiments, the muscle analogue layer is an oleogel.

Another object of the invention is a meat analogue comprising: (a) a fat analogue layer comprising a fat analogue oleogel, wherein the fat analogue oleogel comprises: (i) a continuous gel phase comprising water, a starch source, and a non-starch polysaccharide source; and (ii) a discontinuous oil phase; and (b) a muscle analogue layer. Some preferred embodiments of the fat analogue oleogel have been described above. Some preferred embodiments of the muscle analogue layer have also been described above.

In some preferred embodiments, the muscle analogue layer is in contact with the fat analogue layer. In some preferred embodiments, the meat analogue comprises two or more muscle analogue layers. In some preferred embodiments, the meat analogue comprises two or more fat analogue layers. Preferably the meat analogue is a bacon analogue and, more preferably, the bacon has less than 10 g total fat per 100 g of the bacon analogue.

Another object of the invention is a method of making an oleogel composition, the method comprising: (a) stirring a homogenous powder comprising the non-starch polysaccharide source into water until the powder is hydrated (and, preferably, until the powder is uniformly mixed into the water); (b) stirring an homogeneous powder comprising the starch source into the mixture formed in step (a) until the starch source is hydrated (and, preferably, until the starch source is homogeneously mixed with the non-starch polysaccharide source); (c) stirring the oil of the discontinuous oil phase into the mixture formed in step (b) to create a homogeneous emulsion; and (d) cooling the homogeneous emulsion to set, thereby forming the oleogel composition. Preferably, the oleogel composition is an oleogel composition according to the invention, as described above, and that may include the preferred alternatives described above. Preferably, the homogeneous powder of step b) also comprises salt.

In some preferred embodiments, the method further comprises pouring the homogenous emulsion into a mold after step (c). In some preferred embodiments, the water of step (a) is at a temperature below 8° C and, more preferably, the temperature of the water is maintained below 8° C throughout steps (a) through (c). In some preferred embodiments, the homogenous powder of step a), comprising the non-starch polysaccharide source comprises 0.5 to 4% by weight of the oleogel. In some preferred embodiments, the powder of step a) comprises konjac gum and carrageenan where, preferably the ratio of konjac gum to carrageenan is in the range of 0.5 to 2. In other preferred embodiments, the powder of step a) comprises konjac gum and agar-agar where, preferably the ratio of konjac gum to agar-agar is in the range of 0.5 to 2. In some embodiments, the powder of step a) comprises alginate where, preferably the ratio of alginate is in the range of 0.5 to 4. In some preferred embodiments, the starch source comprises 1 to 15% by weight of the oleogel composition. In some preferred embodiments, the starch source comprises tapioca starch and/or corn starch. In some preferred embodiments, the salt comprises 0.1 to 4% by weight of the oleogel composition. In some preferred embodiments, the water comprises 70 to 90% by weight of the oleogel composition.

### BRIEF DESCRIPTION OF THE DRAWINGS

**FIG. 1** shows the results of a sensory panel comparing pork fat and animal fat analogue compositions made from different concentrations of coconut oil as indicated.

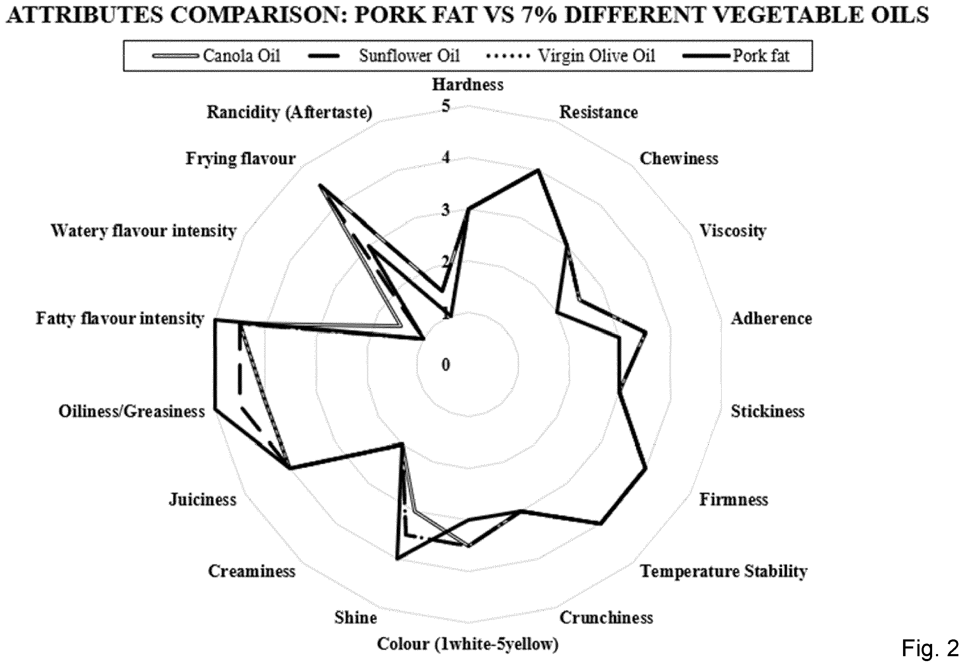

**FIG. 2** shows the results of a sensory panel comparing pork fat and animal fat analogue compositions made using different types of vegetable oils as indicated.

### DETAILED DESCRIPTION

The present invention provides compositions that include a continuous phase and a dispersed oil phase. The continuous phase may be a gel phase and may include water, one or more starches, and one or more non-starch polysaccharides. The dispersed oil phase may include droplets of an oil such as, for example, a vegetable oil. The composition may be an animal fat analogue and may be included in a meat analogue composition. In some embodiments, the composition is an oleogel. Additional details and features are described below.

### I. Definitions

Unless defined otherwise, technical and scientific terms used herein have the same meaning as commonly understood by one of ordinary skill in the art to which this invention belongs. In the event of any conflicting definitions between those set forth herein and those of a referenced publication, the definition provided herein shall control.

The terms "a" and "an" mean "one or more of." For example, "a starch" is understood to represent one or more starches. As such, the terms "a" and "an," "one or more of a (or an)," and "at least one of a (or an)" are used interchangeably herein.

As used herein, the term "about" refers to a value within ± 10% variability from the reference value, unless otherwise specified.

The terms "and/or" and "any combination thereof' and their grammatical equivalents as used herein, can be used interchangeably. These terms can convey that any combination is specifically contemplated. Solely for illustrative purposes, the following phrases "A, B, and/or C" or "A, B, C, or any combination thereof' can mean "A individually; B individually; C individually; A and B; B and C; A and C; and A, B, and C." The term "or" can be used conjunctively or disjunctively unless the context specifically refers to a disjunctive use.

Throughout this disclosure, numerical features are presented in a range format. It should be understood that the description in range format is merely for convenience and brevity and should not be construed as an inflexible limitation on the scope of any embodiments. Accordingly, the description of a range should be considered to have specifically disclosed all the possible subranges as well as individual numerical values within that range to the tenth of the unit of the lower limit unless the context clearly dictates otherwise. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual values within that range, for example, 1.1, 2, 2.3, 5, and 5.9. This applies regardless of the breadth of the range. The upper and lower limits of these intervening ranges may independently be included in the smaller ranges, and are also encompassed within the present disclosure, subject to any specifically excluded limit in the stated range. Where the stated range includes one or both of the limits, ranges excluding either or both of those included limits are also included in the present disclosure, unless the context clearly dictates otherwise.

As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps. It is contemplated that any embodiment discussed in this specification can be implemented with respect to any method or composition of the present disclosure, and vice versa. Furthermore, compositions of the present disclosure can be used to achieve methods of the present disclosure.

Reference in the specification to "some embodiments," "an embodiment," "one embodiment" or "other embodiments" means that a particular feature, structure, or characteristic described in connection with the embodiments is included in at least some embodiments, but not necessarily all embodiments, of the present disclosures. To facilitate an understanding of the present disclosure, a number of terms and phrases are defined herein.

Certain specific details of this description are set forth in order to provide a thorough understanding of various embodiments. However, one skilled in the art will understand that the present disclosure may be practiced without these details. In other instances, well-known techniques or methods have not been shown or described in detail to avoid unnecessarily obscuring descriptions of the embodiments. Further, headings provided herein are for convenience only and do not limit the scope or meaning of the claimed disclosure.

Although methods and materials similar or equivalent to those described herein can be used in the practice or testing of the present disclosure, suitable methods, and materials are described below.

For any conflict in definitions between various sources or references, the definition provided herein shall control.

### II. Compositions

Embodiments disclosed herein include compositions with a dispersed oil phase and a continuous aqueous phase. In some embodiments, the continuous aqueous phase is a gel. Some compositions described herein serve as an animal fat analogue. Some compositions described herein serves as an animal muscle analogue. Compositions described herein may be in the form of an oleogel.

### A. Continuous Phase

Some embodiments of compositions described herein include an aqueous continuous phase. The continuous phase may include water, one or more starches, and one or more non-starch polysaccharides. The continuous phase may be a gel. Compositions described herein may also be emulsions that are not formed into a gel. In some embodiments, the emulsion is a gel precursor or an oleogel precursor in that it may be capable of forming a gel or oleogel after mixing and cooling or heating and cooling. Some embodiments are described herein as having a certain component present at a certain percent or range of percentages by weight of the composition, which refers to the composition as a whole, including the aqueous phase and oil phase. For example, an embodiment that is described as having starch at 1 to 15% by weight of the composition has 1 to 15% by weight of starch in comparison to the weight of the composition as a whole, including the aqueous and oil phase together. Likewise, an embodiment that is described as having oil at 10% by weight of the composition has 10% by weight of oil in comparison to the composition as a whole, including the aqueous, or gel, phase and the oil phase.

Non-limiting examples of starches that may be used in embodiments described herein include tapioca starch, corn starch, potato starch, wheat starch, arrowroot, and rice starch. In preferred embodiments, tapioca starch or corn starch may be used. Mixtures of starches may also be used in embodiments.

In some embodiments, the starch may comprise about 1 to 15% by weight of the composition, which may be an oleogel. In some embodiments, the starch is at least about, at most about, or about 1, 2, 3, 4, 5, 6, 7, 8, 9, 10, 11, 12, 13, 14, or 15% by weight of the composition, or is between any two of these values. The starch may be, for example, 1 to 5%, 1 to 4%, 2 to 4%, 2 to 5%, 2 to 7%, 3 to 7% by weight of the composition.

Non-limiting examples of non-starch polysaccharides that may be included in embodiments described herein include carrageenan, konjac gum, agar-agar, methylcellulose, alginate, xanthan gum, carob bean gum, gum Arabic, fucoidane, ulvane, mannans, galactomannans, xyloglucans, glucomannans, arabonoxylans, pectin, mucilage gum, exudate gum, pectin, fructans, cellulose derivatives, and mixtures of two or more of any of these. In preferred embodiments, the non-starch polysaccharide comprises a mixture of konjac gum with carrageenan or agar-agar or comprises only alginate.

In some embodiments, the non-starch polysaccharide, or mixture of one or more non-starch polysaccharides, may comprise 0.5 to 4% by weight of the composition (e.g., an oleogel). In some embodiments, the total non-starch polysaccharide content of the composition is at least about, at most about, or about 0.5, 1.0, 1.5, 2.0, 2.5, 3.0, 3.5, or 4.0% by weight of the composition, or is between any two of these values.

In some embodiments, the composition (e.g., an oleogel) comprises a mixture of konjac gum and carrageenan. In some embodiments, the ratio of konjac gum to carrageenan is about 0.1 to 10. In some embodiments, the ratio of konjac gum to carrageenan is at least about, at most about, or about 0.1, 0.5, 1, 2, 3, 4, 5, 6, 7, 8, 9, or 10, or between any two of these values. In some embodiments, the ratio of konjac gum to carrageenin is about 0.5 to 2.

In some embodiments, the composition (e.g., an oleogel) comprises a mixture of konjac gum and agar-agar. In some embodiments, the ratio of konjac gum to agar-agar is about 0.1 to 10. In some embodiments, the ratio of konjac gum to agar-agar is at least about, at most about, or about 0.1, 0.5, 1, 2, 3, 4, 5, 6, 7, 8, 9, or 10, or between any two of these values. In some embodiments, the ratio of konjac gum to agar-agar is about 0.5 to 2.

In some embodiments, the composition (e.g., an oleogel) comprises alginate. In some embodiments, the ratio of alginate is about 0.1 to 10. In some embodiments, the ratio of alginate is at least about, at most about, or about 0.1, 0.5, 1, 2, 3, 4, 5, 6, 7, 8, 9, or 10, or between any two of these values. In some embodiments, the ratio of alginate is about 0.5 to 4.

In some embodiments, the composition (e.g., an oleogel) comprises salt. In some embodiments, the salt comprises 0.01 to 4% by weight of the composition. In some embodiments, the salt is at least about, at most about, or about 0.01, 0.1, 0.2, 0.3, 0.4, 0.5, 1.0, 1.5, 2.0, 2.5, 3.0, 3.5, or 4.0 % by weight of the composition, or between any two of these values.

In some embodiments, the composition (e.g., an oleogel) comprises about 70 to 90% water by weight. In some embodiments, the composition comprises at least about, at most about, or about 70, 71, 72, 73, 74, 75, 76, 77, 78, 79, 80, 81, 82, 83, 84, 85, 86, 87, 88, 89, or 90% by weight of water, or between any two of these values.

In some embodiments, the composition does not comprise any starch or non-starch polysaccharide that requires temperatures above 80, 90, or 95° C in order to serve as a gelator or thickener for the composition. In some embodiments, the composition can be formed by heating a precursor emulsion to no more than 30, 40, 50, 60, 65, 70, 75, 80, 85, 90, or 95° C.

In some embodiments, compositions described herein do not comprise any protein source or comprise less than about 2, 1, 0.5, 0.1, or 0.01% protein by weight.

Embodiments disclosed herein also include compositions that serve as animal muscle analogues. An animal meat analogue product may comprise distinct muscle analogue and fat analogue portions. In some embodiments, a meat analogue may comprise layers of an animal fat analogue and layers of an animal muscle analogue.

Embodiments of an animal muscle analogue composition may comprise the same components as described for the animal fat analogue, and may additionally include a mushroom and a protein source. In some embodiments, the mushroom is dehydrated mushroom powder, whole dehydrated mushroom, rehydrated mushroom, or fresh mushroom. In some embodiments, the mushroom is blended into the aqueous phase as a homogeneous puree. In preferred embodiments, the mushroom is fresh mushroom, meaning that it has not been previously dehydrated, and is blended into the continuous phase of the composition. In some preferred embodiments, the mushroom is *Pleorotus ostreatus* (oyster mushroom), *Agaricus bisporus* (white button mushroom), or *Auricularia auricula-judae* (wood ear mushroom). Other mushrooms may also be included in embodiments of the animal muscle analogue, including without limitation, portabella mushrooms, porcini mushrooms, crimini mushrooms, and shitake mushrooms, or combinations thereof.

In some embodiments, the mushroom component comprises 10 to 40% by weight of the composition. In some embodiments, the mushroom component comprises at least about, at most about, or about 10, 15, 20, 25, 30, 35, or 40% by weight of the composition, or between any two of these values.

Protein sources that can be used in embodiments of muscle analogue products include, without limitation, textured proteins such as, for example, textured pea protein, textured thin soy protein, seitan, fibrous soy protein, textured mycoprotein, textured vegetable protein, and combinations thereof. Protein sources can also include, for example, potato protein or pea protein isolate. In preferred embodiments, the muscle analog includes textured pea protein and potato protein.

In some embodiments, the animal muscle analogue composition comprises 5 to 40% texturized protein by weight of the composition. In some embodiments, the animal muscle analogue comprises at least about, at most about, or about 5, 10, 15, 20, 25, 30, 35, or 40% by weight of the composition, or between any two of these values.

In some embodiments, the animal muscle analogue composition comprises 0.1 to 10% by weight of potato protein or pea protein isolate. In some embodiments, the animal muscle analogue composition comprises potato protein or pea protein isolate in an amount at least about, at most about, or about 0.1, 0.5, 1.0, 1.5, 2.0, 2.5, 3.0, 3.5, 4.0, 4.5, 5.0, 5.5, 6.0, 6.5, 7.0, 7.5, 8.0, 8.5, 9.0, 9.5 or 10% by weight of the composition, or between any two of these values. Other high-protein products may also be included in these amounts. Powdered protein sources are known in the art and can be included in the composition in these amounts.

In some embodiments, the animal muscle analogue composition comprises about 20 to 50% water, about 5 to 30% texturized protein, about 1 to 15% starch, about 0.01 to 4% salt, and about 0.5 to 4% non-starch polysaccharide, all percentages given as a percent by weight in relation to the weight of the composition.

While embodiments herein may be described as animal fat analogues, muscle analogues, or meat analogues, the compositions described herein are not limited to those purposes. Compositions described herein have various uses beyond specifically being used to substitute for animal fat, muscle, or meat.

### B. Discontinuous Phase

Embodiments disclosed herein comprise a discontinuous oil phase comprising oil droplets dispersed in an aqueous phase, for example, an aqueous gel matrix. In some embodiments, the oil is a liquid at room temperature. In some embodiments, the oil has a saturated fat content of less than about 20, 15, 10, 9, 8, 7, 6, 5, 4, 3, 2, or 1% by weight of the oil, or a range between any two of these values.

In some embodiments, the oil is a vegetable oil. In some embodiments, the vegetable oil is olive oil (which can include extra-virgin olive oil, virgin olive oil, or olive oil), coconut oil, avocado oil, canola oil, peanut oil, almond oil, sesame oil, palm oil, corn oil, sunflower oil, flaxseed oil, cottonseed oil, walnut oil, grapeseed oil, safflower oil, palm kernel oil, shea oil, or combinations thereof. In some embodiments, the oil is a microbial oil such as, for example, an algal oil, a yeast oil, or other fungal oil. In preferred embodiments, the oil is olive oil.

In some embodiments, the oil component of compositions described herein comprise an oil or fat that is solid at room temperature. In some embodiments, the oil is an algal butter or fat, yeast butter or fat, or other fungal butter or fat.

In some embodiments, the oil comprises about 5 to 20% by weight of the composition. In some embodiments, the oil comprises at least about, at most about, or about 5, 6, 7, 8, 9, 10, 11, 12, 13, 14, 15, 16, 17, 18, 19, or 20% by weight of the composition, or between any two of these values.

### C. Flavoring Agents & Coloring Agents

Embodiments described herein may comprise one or more flavoring agents and/or one or more coloring agents. In some embodiments, the flavoring agent or coloring agent is a water-soluble flavoring agent. In some embodiments, water-soluble flavoring agents or coloring agents are included in the aqueous phase of a composition (e.g., an oleogel). In some embodiments, the flavoring agent is a fat-soluble flavoring agent or coloring agents. In some embodiments, a fat-soluble flavoring agent or coloring agent is included in the dispersed oil phase of a composition (e.g., an oleogel).

Embodiments may include flavoring agents to cause a meat analogue, for example, to have a flavor that resembles a natural meat product. Flavoring agents may also include agents that impart a smoke flavor.

### D. Composition Properties

In some embodiments, the composition is an animal fat analogue. In some embodiments, the composition has a texture, firmness, elasticity, and/or chewiness resembling natural animal fat such as, for example, pork back fat, pork belly fat, or beef fat. In some embodiments, the composition is an oleogel.

Properties of compositions, including oleogel compositions, may be analyzed by rheological characterization, structural characterization, microscopic characterization, and molecular characterization using such instruments as viscometers, rheometers, texture measuring systems, differential scanning calorimeters, scanning electron microscope, atomic force microscope, NMR, and NIR. Crispiness of an oleogel product before or after cooking may be measured, for example, by the waveform and spectrogram of an audio recording, or by suing an acoustic envelope detector attached to a texture analyzer.

In some embodiments, compositions, including oleogel compositions, maintain stability under conventional cooking conditions. Stability may be measured, for example, by the ability of the composition to retain dispersed oil. In some embodiments, the composition loses less than 5, 10, 15, 20, 25, 30, 35, 40, 45, or 50% of the oil when subjected to pan frying at 180 to 200° C for 5 minutes. In some embodiments, the composition loses less than 5, 10, 15, 20, 25, 30, 35, 40, 45, or 50% of its moisture content when subjected to pan frying at 180 to 200° C for 5 minutes.

In some embodiments, the composition, which may include an oleogel composition, is browned under conventional cooking conditions. In some embodiments, the composition is capable of undergoing the Maillard reaction when subjected to pan frying at 180 to 200° C.

In some embodiments, the composition crisps under conventional cooking conditions. In some embodiments, the composition produces a pitch and loudness that matches the sound of a natural meat product (e.g., bacon) when eaten after being cooked.

In some embodiments, the composition, which may be an oleogel composition, has an elasticity that resembles that of a natural animal fat or meat. In some embodiments, the composition has an elongation at break of about 20, 30, 40, 50, 60, 70, or 80%. In some embodiments, the elongation at break is measured at 20° C. In some embodiments, the composition has an elongation at break that is at least 50, 60, 70, 80, 90, 95, or 99% of the elongation at break of a natural meat comparator, such as a bacon slice. Crispness of the cooked composition can be measured, for example, by auditory analysis. Loudness and frequency of the sound made while chewing a product may be measured, for example, by a microphone placed at a distance of one inch from a subject's mouth. Captured sound can be analyzed using audio software such as Audacity, and spectrograms and waveforms can be compared between products. In some embodiments, the auditory properties (e.g., loudness and frequency) of the product are within 50, 60, 70, 80, 90, 95, or 99% of a cooked bacon comparator.

In some embodiments, the animal fat analogue does not include any components derived from animals. In some embodiments, the animal muscle analogue does not include any components derived from animals.

### III. Meat Analogue Products

In some embodiments, compositions disclosed herein, which may include oleogel compositions and other oil-in-water emulsion compositions, are included in a meat analogue product. In some embodiments, the meat analogue product comprises one or more layers of an animal fat analogue as described above. In some embodiments, the meat analogue further comprises a distinct muscle analogue layer. The muscle analogue layer can be a muscle or meat analogue known in the art. The animal fat analogue oleogel embodiments disclosed herein can substitute for animal fat in a variety of different meat products. It is specifically contemplated that the animal fat analogue compositions can be used in products separately from the muscle analogue compositions disclosed herein.

In some embodiments, an animal fat analogue oleogel as described herein is combined with a muscle fat analogue oleogel as described herein to make a whole meat analogue, which includes both muscle and fat analogue portions. In some embodiments, the fat analogue oleogel forms a discrete layer in the meat analogue product. In some embodiments, one or more muscle analogue layers are in contact with one or more animal fat analogue layers. In some embodiments, animal fat analogue layers alternate with muscle analogue layers. In some embodiments, the meat analogue product resembles a pork belly bacon, with distinct portions of muscle analogue and animal fat analogue.

Non-limiting examples of meat analogue products that may include embodiments of the animal fat analogue oleogels described herein and/or embodiments of the muscle analogue oleogels described herein include pork belly bacon analogue, a pork shoulder analogue, a guanciale analogue, a pancetta analogue, a salt pork analogue, and prosciutto analogue, a ham analogue, a chuck roast analogue, a rasher analogue, a brisket analogue, a corned beef analogue, a pastrami analogue, a ground meat analogue, a meatball analogue, a sausage analogue, a beef steak analogue, a sirloin analogue, a processed cured meat analogue, a chorizo analogue, an andouille analogue, a salami analogue, or analogues of other meat products.

In some embodiments, meat analogue products (or animal fat analogue or muscle analogue) are not dehydrated before cooking or storage.

In some embodiments, the meat analogue product is shelf stable for at least 10, 20, 30, 40, 50, or 60 days without freezing. In some embodiments, the meat analogue (or animal fat analogue oleogel or muscle analogue oleogel) suffers no measurable or discernible loss of quality with respect to texture, flavor, or appearance after at least 10, 20, 30, 40, 50, or 60 days stored at 1 to 6° C.

In some embodiments, the meat analogue (or animal fat analogue oleogel or muscle analogue oleogel) can be frozen and thawed without measurable or discernible loss of quality with respect to texture, flavor, or appearance. Shelf stability may be measured, for example, by comparing color, aroma, flavor, aftertaste, juiciness, etc. characteristics between a fresh product and an otherwise identical product after storage for a given time (e.g., 10, 20, 30, 40, 50, or 60 days or more) at a given temperature, (e.g., -20, -10, -5, 0, 5, 10, 15, or 20°C, or a range between any two of these values). Comparisons may be made, for example, by trained sensory panels/tasters. Comparisons may also be made, for example, by measuring elasticity, color characteristics, crispiness, or other physical properties.

### IV. Production Methods

Provided herein are methods of preparing compositions, e.g., oleogel compositions. In some embodiments, the method comprises the following steps in the order listed: (1) hydrating non-starch polysaccharide powder by stirring into water, (2) mixing starch into the mixture resulting from step 1, (3) emulsifying oil into the mixture resulting from step 2. The inventors surprisingly found that the order of adding non-starch polysaccharide and starch has a substantial effect on the ability of a stable oleogel to form. Mixing the starch into water either before or at the same time as the non-starch polysaccharides can have a detrimental impact on the resulting oleogel composition, with the result being a composition that is too loose and that does not resemble animal fat. Salt can be added during or after step 2 or 3 without detrimental effects.

In some embodiments, the water used for steps 1 through 3 above is cold water (e.g., less than 8° C. In some embodiments, the water is at least about, at most about, or about 2, 3, 4, 5, 6, 7, or 8° C, or between any two of these values. In some embodiments, warmer water can be used. In some embodiments the water used for steps 1 through 3 above is at least about, at most about, or about 9, 10, 11, 12, 13, 14, 15, 20, 25, 30, 35, or 40° C, or between any two of these values.

The composition resulting from the emulsion performed at step 3 may be referred to as a gel precursor or oleogel precursor. To form a gel or an oleogel from the gel precursor or oleogel precursor, in some embodiments the precursor may be mixed at room temperature and then cooled. To form a gel or an oleogel from the gel precursor or oleogel precursor, in some embodiments the precursor may be heated and then cooled. In some embodiments, the precursor is heated to a temperature required to allow the components to support gel formation upon cooling. For example, in some embodiments, a carrageenancontaining emulsion is heated to above 60° C, which activates the gel-forming capability of carrageenan. Upon cooling to a lower temperature, for example 4° C, a gel may be formed, depending on the amount of carrageenan and other gelator compounds present in the emulsion, and also depending on whether additional compounds that inhibit gel formation are present in the emulsion. The temperature to which the oleogel precursor is to be heated in order to induce gel formation and/or thickening upon cooling depends on which non-starch polysaccharides and starches are present in the emulsion. In some embodiments, the emulsion is heated to an internal temperature of at least about, at most about, or about 20, 25, 30, 35, 40, 45, 50, 55, 60, 65, 70, 75, 80, 85, 90, or 95° C, or between any two of these values. To allow the gel or oleogel to set, in some embodiments, the emulsion is allowed to cool or is refrigerated until the temperature reaches 2, 3, 4, 5, 10, 15, 20, 25, 30, 35, or 40° C or below, or between any two of these values.

Also provided herein are methods of producing a layered meat analogue product comprising one or more animal fat analogue layers (which may be oleogel layers) and one or more muscle analogue layers. In some embodiments, precursor emulsions (e.g., gels or oleogels) are placed into a mold in alternating layers. In some embodiments, compression is applied between application of each layer or after all layers are placed. In some embodiments, the meat analogue product comprises 2, 3, 4, 5, 6, or more alternating layers of animal fat analogue and muscle analogue. In some embodiments, after the layers of precursor emulsions are placed in the mold and, if applicable, pressed, the oleogel precursors are heated to an internal temperature high enough to activate the gel-forming and/or thickening capabilities of any starches or non-starch polysaccharides in the precursors. In some embodiments, the precursors are heated to an internal temperature of at least about, at most about, or about 20, 25, 30, 35, 40, 45, 50, 55, 60, 65, 70, 75, 80, 85, 90, or 95° C, or between any two of these values. To allow the oleogel meat product to set, in some embodiments, the emulsion is allowed to cool or is refrigerated until the temperature reaches 2, 3, 4, 5, 10, 15, 20, 25, 30, 35, or 40° C or below, or between any two of these values.

Similar production methods can be used when embodiments of the animal fat analogue described herein are combined with other, non-oleogel, meat or muscle analogue products.

### EXAMPLES

These examples are provided for illustrative purposes only and not to limit the scope of the claims provided herein.

### Example 1. Oleogel Animal Fat Analogue

This Example describes an oleogel that can replace animal fat by having similar functionality and healthier nutritional value. The ingredients that make up the oleogel are, in quantitative order in the formulation: water, oil, starch, konjac gum, carrageenan and salt.

The objective of the work was to develop an animal fat analogue with following properties: meet the appearance and functionalities of animal fat; be made up of ingredients that are not, under any circumstances, of animal origin; maintain a sound structure over a wide range of temperatures, including refrigeration temperatures, product cooking temperatures at 200°C, and ideally, freezing temperatures (-18°C); make a positive nutritional contribution to the consumer compared to the values of a fat of animal origin; be composed of natural ingredients; have a shelf life of at least one month under refrigeration; be designed to work on an industrial scale; be optimized as much as possible in terms of economic cost.

The inventors investigated starches that could be used to meet the above objectives. For this purpose, aqueous mixtures of starches and non-starch polysaccharides were made at different concentrations, considering the technical specifications of each of the texturizing agents, and were brought to 85° C for 30 minutes in a mold, then cooled in the same mold to 4° C. The properties of the resulting compositions were as shown in Table 1:

**TABLE 1:**

| **COMPONENT** | |
|---|---|
| **CARRAGEENAN** | **RESULTS** |
| **wt%** | |
| 1.00 | Low hardness viscous gel |
| 1.50 | gel |
| 1.75 | Slightly harder gel |
| 2.00 | Too hard gel |
| 2.50 | Too hard gel |

| **ALGINATE** | |
|---|---|
| wt% | |
| 1.00 | Heterogeneous, gelled in the lower part with fragile gel and thickened in the upper part. |
| 2.00 | Gel is formed, soft and elastic but homogeneous. Smooth gel. Custard type gel. |
| 3.00 | A firm gel is formed. White color. |

| **AGAR-AGAR** | |
|---|---|
| wt% | |
| 1.00 | Soft gel |
| 1.50 | Soft gel |
| 2.00 | Firm gel |
| 3.00 | Very hard gel |

| **METHYLCELLULOSE** | |
|---|---|
| wt% | |
| 1.00 | Rigid gel that presents syneresis and is thermo-reversible at temperatures higher than 50ºC. |
| 2.00 | Weak thermosetting gel at T^{a} higher than 60° C |
| 3.00 | Weak thermosetting gel at T^{a} higher than 60° C |

| **KONJAC GUM** | |
|---|---|
| wt% | |
| 1.00 | Very weak elastic and firm gel |
| 1.50 | Weak firm gel -thermosetting |
| 2.00 | Firm and elastic - thermosetting gel |
| 3.00 | Hard gel -thermosetting |

| **CORN STARCH** | |
|---|---|
| wt% | |
| 6.00 | Melts to the touch. Very hard gel on the inside, but as we move to the outside it is softer. |
| 8.00 | It is a little more resistant than the 6% and looks snotty and very sticky (gummy). It looks like a jellybean. Very hard gel on the inside, but as we move to the outside it gets softer. |
| 10.00 | It is a little more resistant than the 8%, but similar in all other characteristics |

| **TAPIOCA STARCH** | |
|---|---|
| wt% | |
| 8.00 | Very elastic and more resistant than 6°/ cornstarch gel. |
| 10.00 | Very elastic and resistant gel. Gummy texture. |
| 12.00 | Very elastic and resistant gel. Gummy texture. Similar to 10%. |

| **POTATO STARCH** | |
|---|---|
| wt% | |
| 8.00 | Transparent color, viscous gel, but not firm. |
| 10.00 | Gel similar to 8%. |
| 12.00 | Firm gel, transparent color, good hardness. |

| **RICE STARCH** | |
|---|---|
| wt% | |
| 8.00 | Very weak gel compared to potato starch |
| 10.00 | Fragile gel with low hardness |
| 12.00 | Harder gel |

Various combinations of the starches and polysaccharides were prepared by heating a mixture of the indicated amounts in water to 85° C for 30 minutes in a mold. Resulting compositions were cooled to 4° C in the same mold and sliced (if firm enough). Compositions were also cooked by pan frying with oil and evaluated for texture and durability. Results are shown in Table 2 below.

**TABLE 2**

| **INTERACTIONS** | | |
|---|---|---|
| **wt%** | **wt%** | **RESULTS** |
| **ALGINATE** | **KONJAC GUM** | |
| 1.00 | 1.00 | Thick, mucus texture. Very viscous. Translucent to white. Not firm. Not gel. |
| 2.00 | 1.00 | A very soft and elastic but homogeneous gel is formed. Smooth gel. |
| 3.00 | 1.00 | A gel is formed, firm and seems to have trapped air, as bubbles are visible throughout the gel. |

| **AGAR-AGAR** | **KONJAC GUM** | |
|---|---|---|
| 1.00 | 1.00 | Slightly resistant and firm gel. |
| 2.00 | 1.00 | Firm and resistant gel in cold |
| 2.50 | 2.50 | Hard, homogeneous and well-handling fat |
| 2.50 | 5.00 | Very hard and with air bubbles. |

| **AGAR-AGAR** | **METHYLCELLULOSE** | |
|---|---|---|
| 1.00 | 2.00 | Very liquid. |
| 1.50 | 2.00 | Good reference, quite good texture (not too hard, and not too soft) |
| 2.00 | 2.00 | Too hard. |

| **CARRAGENNAN** | **METHYLCELLULOSE** | |
|---|---|---|
| 1.50 | 2.00 | Decomposes and sandy texture. |
| 2.00 | 1.50 | Sandy texture and very weak. |
| 2.50 | 2.50 | In cold it is compact and slightly hard, opaque color. However, it has a slightly bad sliceability (it breaks, dough texture). When cooking it becomes harder, bad chewiness and dough texture. |

| **CARRAGENNAN** | **KONJAC GUM** | |
|---|---|---|
| 2.50 | 2.50 | Gel resistant, Good sliceablility, nice appearance (translucent, fatty). Homogenous. In hot (when cooking) it becomes slightly soft and sticky (not very manageable). Once cooked, really hard and high chewiness. Really rigid and elastic gel in cold. |
| 1.00 | 1.00 | It forms a very firm, resistant, and elastic gel at the same time. Transparent and homogeneous. |
| 1.75 | 2.50 | It behaves very similar to the 2.50/2.50 composition. |
| 1.50 | 1.50 | It forms a very firm and elastic gel at the same time. Transparent and homogeneous. When hot it is not very stable. |
| 2.00 | 1.50 | Forms a very firm and elastic gel at the same time. Transparent and homogeneous. Not very stable when hot. |
| 1.50 | 2.00 | Forms a very firm and elastic gel at the same time. Transparent and homogeneous. Very good combination and thermostable. |

The samples with mixtures of carrageenan and konjac gum, or agar-agar and konjac gum, were chosen for further development because they are derived from natural sources and due to good synergy between them, meaning that they maintain their functional capability even though the other agents change molecular structure of the final result. The mixtures have been selected taking into account characteristics such as stability to temperature and pH, type of gel they form, synergies with other texturizing agents and starches, ionic charge of the medium and resistance to it.

Carrageenan works as a gel when it cools down, after a previous heating above 60° C in which it acquires a viscous texture. The quality and rigidity of the gel it forms depend on the concentration of the polymer and the amount of potassium, ammonium or calcium ions. It is thermoreversible and not freeze-thaw stable on its own.

Agar-agar needs to be heated above 90° C to solubilize completely and once it cools below 40° C it forms a gel. In addition, it is thermoreversible with strong hysteresis and high salt concentrations (5%) prevent gelation.

Konjac gum is soluble in cold water with slow hydration rate, allowing it to disperse without shear force. Once solubilized, it requires heating and subsequent cooling for the formation of a hot thermosetting gel.

Four different mixtures of starches and non-starch polysaccharides were prepared and tested at cold and hot temperatures as above: (1) konjac gum, agar-agar, and corn starch, (2) konjac gum, agar-agar, and tapioca starch, (3) konjac gum, carrageenan, and corn starch, and (4) konjac gum, carrageenan, and tapioca starch. Samples were prepared by heating a mixture of the indicated amounts in a mold to 85° C for 30 minutes, followed by cooling to 4° C in the same mold and slicing. Compositions were also cooked by pan-frying with oil and evaluated for texture and durability. Results are shown in Table 3 below.

**TABLE 3**

| **Sample Number** | **COMPONENTS** | | | |
|---|---|---|---|---|
| | **wt%** | **wt%** | **wt%** | **RESULTS** |
| | **AGAR-AGAR** | **KONJAC GUM** | **CORN STARCH** | |
| 1 | 2.00 | 1.50 | 6 | Gel of high hardness and firmness in cold. Medium hot stability and medium tackiness after cooking. |
| 2 | 2.00 | 1.50 | 8 | Gel of high hardness and firmness in cold. Medium hot stability and medium tackiness with slight crunchiness after cooking. |
| 3 | 2.00 | 1.50 | 10 | High cold gel hardness and firmness. High hot stability and medium tackiness with medium crispness after cooking. |
| 4 | 2.50 | 2.50 | 6 | Gel of high hardness and resistance both in cold and hot. Difficult chewiness after cooking. |
| 5 | 2.50 | 2.50 | 8 | Gel of high hardness and resistance both in cold and hot. Difficult to chew after cooking, very similar to 6%. |
| 6 | 2.50 | 2.50 | 10 | Gel of high hardness and resistance both hot and cold. Difficult chewiness after cooking and slight sandiness. |

| | **AGAR-AGAR** | **KONJAC GUM** | **TAPIOCA STARCH** | |
|---|---|---|---|---|
| 7 | 2.00 | 1.50 | 8 | Gel of high hardness and resistance in cold. When hot, the gel persists with slight viscosity (mucus). Difficult to chew after cooking. |
| 8 | 2.00 | 1.50 | 10 | Gel of high hardness and resistance in cold. When hot, the gel persists with slight viscosity (gummy). Difficult to chew after cooking. |
| 9 | 2.00 | 1.50 | 12 | Gel of high hardness and resistance in cold. In hot gel with gummy texture. Difficult to chew after cooking. |
| 10 | 2.50 | 2.50 | 8 | Gel of high hardness and resistance both when cold and hot. Difficult to chew after cooking. |
| 11 | 2.50 | 2.50 | 10 | Gel of high hardness and resistance both hot and cold. Difficult to chew after cooking (gummy texture). |
| 12 | 2.50 | 2.50 | 12 | Gel of very high hardness and resistance both hot and cold. Difficult to chew after cooking (gummy texture). No differences are perceived with 10%. |

| | **CARRAGENNAN** | **KONJAC GUM** | **CORN STARCH** | |
|---|---|---|---|---|
| 13 | 1.50 | 1.50 | 6 | Gel of medium hardness and correct stability both hot and cold. Slightly sticky after cooking. |
| 14 | 1.50 | 1.50 | 8 | Gel of medium hardness and correct stability both hot and cold. Slightly sticky as in 6%. |
| 15 | 1.50 | 1.50 | 10 | Gel of medium hardness and correct stability both hot and cold. Slightly sticky as well as crunchy after cooking. |
| 16 | 2.00 | 2.50 | 6 | High gel hardness and hot stability. High stickiness creating a difficult chewiness after cooking. |
| 17 | 2.00 | 2.50 | 8 | High gel hardness and stability when hot. High tackiness creating a difficult chewiness after cooking. Similar to 6%. |
| 18 | 2.00 | 2.50 | 10 | High gel hardness and hot stability. High tack creating a difficult chewability after cooking. Similar to 6 and 8%. |

| | **CARRAGENNAN** | **KONJAC GUM** | **TAPIOCA STARCH** | |
|---|---|---|---|---|
| 19 | 1.50 | 1.50 | 8 | Gel of medium hardness and correct stability both hot and cold. Slightly viscous when hot. |
| 20 | 1.50 | 1.50 | 10 | Gel of medium hardness and correct stability both in cold and hot. Slightly viscous when hot. High hardness when cold. |
| 21 | 1.50 | 1.50 | 12 | Gel of medium hardness and correct stability both hot and cold. Slightly viscous when hot. Once cold, high hardness. |
| 22 | 2.00 | 2.50 | 8 | Gel of high hardness and stability when hot. Very rubbery texture, creating a difficult chewiness after cooking. |
| 23 | 2.00 | 2.50 | 10 | Gel of high hardness and stability when hot. Very rubbery texture, impossible to chew after cooking. |
| 24 | 2.00 | 2.50 | 12 | Gel of high hardness and stability when hot. Very rubbery texture, impossible to chew after cooking. |

The following observations were made with respect to the above testing to develop a suitable aqueous phase for an oleogel animal fat analogue: 1. The use of tapioca starch or corn starch in the specified percentages aids in the formation of the gels and achieves a structure more akin to an animal fat than mixtures of konjac gum and carrageenan or konjac gum and agar-agar without the starch. 2. The use of corn starch or tapioca starch contributes browning during cooking, resulting from the Maillard reaction, making the appearance visually more like a fat of animal origin. 3. Due to their demonstrated functional characteristics, corn starch and tapioca starch were considered as suitable ingredients to continue with the formulation, also being able to reduce the quantities of the non-starch polysaccharides that would be used both for cost and availability. 4. In all formulations, the corn starch is observed to be a little bit crispier than the rest.

Based on the above results, sample numbers 13, 16, 19, and 22 in Table 3 were found to be suitable for further development.

For development of the oil phase for the oleogel, various oils were tested. Oil was mixed into the aqueous phase with stirring at 20° C until an emulsion was formed. The mixture was poured into molds and reduced to 4° C. Several experimental tests were carried out with different percentages, starting from 20% by weight with respect to the oleogel composition as a whole and reducing it until a nutritionally coherent and balanced result was obtained, complying with the structural requirements. For the selection of ingredients and proportions, all the tests reflected in the document were subjected to sensory analysis. Several tests were performed with coconut oil, canola oil, sunflower oil, sesame oil, shea oil, and olive oil. All oils performed well with the aqueous phase formulations that were validated.

A sensory panel for the analysis was composed of members of the product development team, who analyzed the samples for texture, palatability, and flavor parameters. The attributes were defined on the basis of those that allowed a more accurate comparison of the formulations obtained versus an animal fat, being the following for each parameter:
- Texture: Hardness, Resistance, Chewiness, Viscosity, Adherence, Stickiness and Firmness, Temperature Stability, and Crunchiness.
- Palatability: Color, Shine, Creaminess, Juiciness, and Oiliness/Greasiness.
- Flavor: Fatty flavor intensity, Watery flavor intensity, Animal flavor, Frying flavor (postcooking sunflower oil notes), and Rancidity.

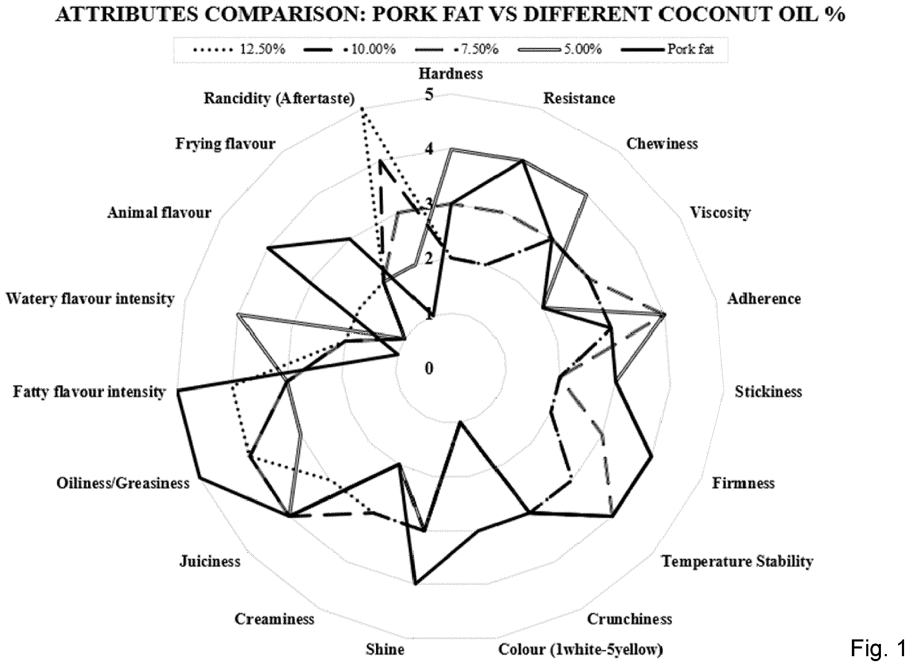

The results obtained from different percentages using coconut oil were compared with those obtained with pork fat by the same panel. Average scores from the sensory panel are shown in Table 4, Table 5, and Table 6, and FIG. 1, with panelists rating for each selected attribute in 1-5 scales (1 being lowintensity and 5 being high-intensity).

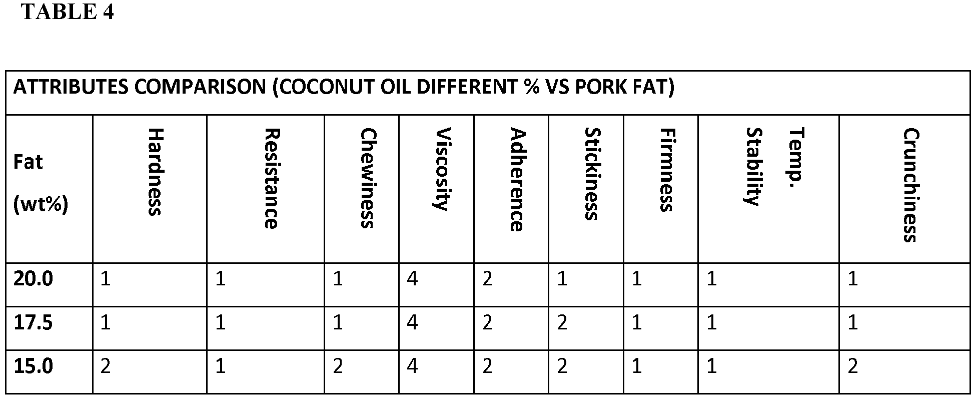

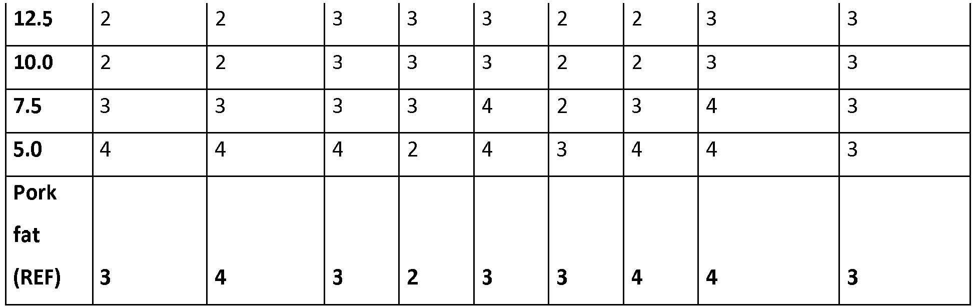

**TABLE 5**

| **ATTRIBUTES COMPARISON (COCONUT OIL DIFFERENT % VS PORK FAT)** | | | | | |
|---|---|---|---|---|---|
| **Fat (wt%)** | **Colour (1white-5yellow)** | **Shine** | **Creaminess** | **Juiciness** | **Oiliness/Greasiness** |
| **20.00%** | 1 | 2 | 5 | 2 | 5 |
| **17.50%** | 1 | 2 | 5 | 2 | 5 |
| **15.00%** | 1 | 2 | 4 | 2 | 4 |
| **12.50%** | 1 | 3 | 3 | 3 | 4 |
| **10.00%** | 1 | 3 | 3 | 4 | 4 |
| **7.50%** | 1 | 3 | 2 | 4 | 4 |
| **5.00%** | 1 | 3 | 2 | 4 | 3 |
| **Pork fat (REF)** | **3** | **4** | **2** | **4** | **5** |

**TABLE 6**

| **ATTRIBUTES COMPARISON (COCONUT OIL DIFFERENT % VS PORK FAT)** | | | | | |
|---|---|---|---|---|---|
| **Fat (wt%)** | **Fatty flavor intensity** | **Watery flavor intensity** | **Animal flavor** | **Frying flavor** | **Rancidity (Aftertaste)** |
| **20.00%** | 4 | 1 | 2 | 2 | 5 |
| **17.50%** | 4 | 1 | 2 | 2 | 5 |
| **15.00%** | 4 | 1 | 2 | 2 | 5 |
| **12.50%** | 4 | 2 | 2 | 2 | 5 |
| **10.00%** | 3 | 2 | 1 | 2 | 4 |
| **7.50%** | 3 | 2 | 1 | 2 | 3 |
| **5.00%** | 3 | 4 | 1 | 2 | 2 |
| **Pork fat (REF)** | **5** | **1** | **4** | **3** | **1** |

The coconut oil oleogels with 20.00%, 17.50% and 15.00% of coconut oil were not chosen for further development because the high content of fat resulted in unstable emulsions. Sensory performances of 12.50% and 10.00% were unsatisfactory because of high Aftertaste and low Juiciness of the samples, the results for 12.50% coconut oil being the worst. Also 5.00% sample was not chosen because of the high Watery Flavor Intensity and the Hardness and Chewiness of the Sample.

The 7.50% Coconut oil was selected as the more similar to pork fat and trials were continued with this percentage. Further trials were made with 7.00% fat since no difference was detected with a 0.5% decrease in fat.

Results in Color and Shiny for the 7.5% coconut oil were not favorable due to high white color intensity in all samples and low Shiny results compared to Pork fat. With the purpose of improving these attributes, selected vegetable fats where tasted in future trials.

In the second stage, various other oils were tested at 7%. Several tests were performed with canola oil, sunflower oil, and olive oil. All oils performed well with the aqueous phase formulations that were validated and Color and Shiny attributes were similar to Pork fat.

While all of the oils tested proved suitable for the animal fat analogue oleogel (see Table 7, Table 8, and Table 9), olive oil was chosen for further development for its nutritional properties and availability, as it is one of the essential fats in Mediterranean cuisine.

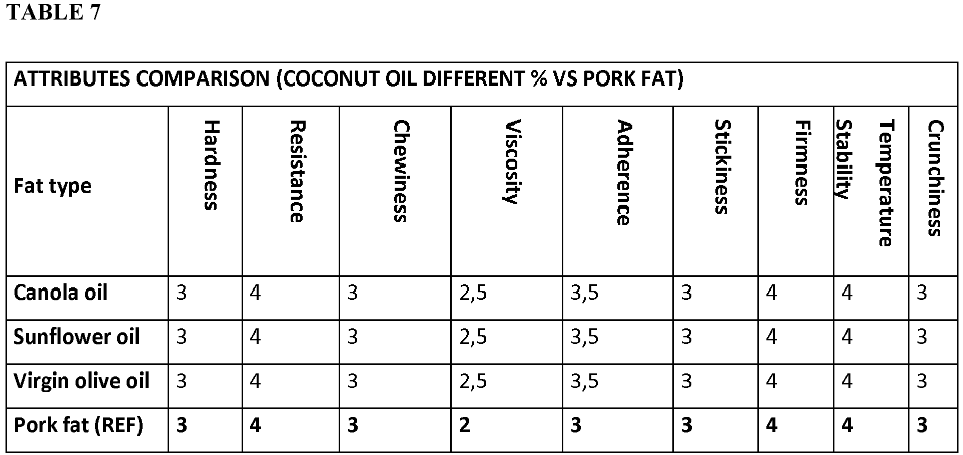

**TABLE 8**

| **ATTRIBUTES COMPARISON (COCONUT OIL DIFFERENT % VS PORK FAT)** | | | | | |
|---|---|---|---|---|---|
| **Fat type** | **Colour (1white-5yellow)** | **Shine** | **Creaminess** | **Juiciness** | **Oiliness/Greasiness** |
| **Canola oil** | 3,5 | 3 | 2 | 4 | 4 |
| **Sunflower oil** | 3,5 | 3,5 | 2 | 4 | 4,5 |
| **Virgin olive oil** | 3,5 | 3,5 | 2 | 4 | 4 |
| **Pork fat (REF)** | **3** | **4** | **2** | **4** | **5** |

**TABLE 9**

| **ATTRIBUTES COMPARISON (COCONUT OIL DIFFERENT % VS PORK FAT)** | | | | |
|---|---|---|---|---|
| **Fat type** | **Fatty flavour intensity** | **Watery flavour intensity** | **Frying flavour** | **Rancidity (Aftertaste)** |
| **Canola oil** | 4,5 | 1,5 | 4,5 | 1,5 |
| **Sunflower oil** | 4,5 | 1 | 4,5 | 1,5 |
| **Virgin olive oil** | 4,5 | 1 | 3 | 1 |
| **Pork fat (REF)** | **5** | **1** | **3** | **1** |

The tests of the aqueous phase samples that proved suitable to follow in the next experimental steps were tested together with the oleic phase for the production of the emulsion. Carrageenan was preferred over agar-agar in these tests due to the higher activation temperature of agar-agar. The outcome of the addition of the selected oil phase to the selected aqueous phase resulted in a high-stable sample under refrigeration conditions while a high-stability in cooking conditions (180-200°C).

During the experimental tests, it was seen that high amounts of starch in the formula had an artificial effect on the bite of the final product, considering it as a gel that was too resistant and not at all similar to a fat of animal origin. Therefore, after a series of trials and analysis, the oleogel fat analogue was obtained in the range of % as shown in Table 10:

**TABLE 10**

| | | |
|---|---|---|
| 80-90 | wt% | WATER |
| 0.5-2.5 | wt% | KONJAC GUM |
| 0.5-2.5 | wt% | CARRAGEENAN |
| 3.0-10.0 | wt% | OLIVE OIL |
| 1.5-7.0 | wt% | TAPIOCA STARCH |
| 0.05-3.0 | wt% | SALT |
| **100.00%** | **TOTAL** | |

The emulsification process can be carried out either at low temperature (for example, 4 to 40° C), or at high temperature (for example, 85° C). In some processes, a low temperature is preferred to inhibit potential pathogen growth.

Various mixing methods were tested for production of an oleogel animal fat analogue. The following orders of mixing and ingredient addition were tested:
1. Homogenization and hydration with continuous agitation with the following components added to the water one at a time in the indicated order: homogeneous powder mixture of non-starch polysaccharides, starch, oil, and salt.
2. Homogenization and hydration with continuous agitation of the non-starch polysaccharides and starch added to the water at the same time, followed by oil, then salt.
3. Homogenization and hydration with continuous agitation with the following components added one at a time in the indicated order: starch, homogeneous powder mixture of non-starch polysaccharides, oil, and salt.
4. Homogenization and hydration with continuous agitation with the following components added one at a time in the indicated order; non-starch polysaccharides and starch added at the same time, salt, and oil.
5. Homogenization and hydration with continuous agitation with the following components added to the water one at a time in the indicated order: homogeneous powder mixture of non-starch polysaccharides, starch, oil, and salt.

Methods 1 and 5 were chosen due to the fact that they produced suitable oleogel compositions, whereas methods 2, 3, and 4 failed because the texture was too fluid and not similar to an animal fat.

The resulting emulsion can then be stored at 4° C. To make the oleogel, the emulsions are poured into a mold and heated to 85° C, followed by cooling to set the gel. This same process can be used with other suitable starches and non-starch polysaccharides. In addition, similar results can be obtained by adding the salt before adding the oil.

### Example 2. Bacon Analogue

This Example relates to the development of a food product substitute for animal bacon consisting of distinct layers of a fat analogue and a muscle (or meat) analogue to make a pork belly, or bacon, analogue product. The fat analogue layer is an oleogel, an emulsion of vegetable oil in a water-based gel, while the meat analogue layer is mushroom based. This embodiment meets the demand for healthier alternatives to meat, with a low saturated fat content. The inventors managed to increase the unsaturated fatty acids to obtain as a result a mushroom-based bacon with a low saturated fat content, free of sugars, and being a source of protein and fiber. The aim of the inventors was to meet consumer expectations in terms of organoleptic and textural profiles of the product and, therefore, to be as similar as possible to its meat analog. However, the bacon developed meets several objectives:
- To be a substitute for animal bacon including both sensory properties and product behavior.
- Ingredients that make up the invention must not be of animal origin.
- Free of allergens.
- Maintain a stable structure over a wide temperature range, including refrigeration temperature, cooking temperature of the product at 180-200°C and, ideally, freezing temperature (-18°C).
- Contribute positively to the consumer on a nutritional level in comparison to the values of an animal origin bacon.
- The composition will be made from a relatively small list of ingredients, all of which are natural ingredients.
- Shelf life is set at a minimum of one month under refrigeration.
- The process must be operable on an industrial scale.
- The choice of ingredients and the optimization of the process will be determining factors to reduce the final cost.

Regarding the mentioned facts, the present embodiment includes distinct fat and muscle analogue layers in the product, unlike most competitors currently on the market. The fat layer is a stabilized emulsion of water and vegetable oil. For this Example, the oleogel formulation of Table 11 was used as the fat analogue.

The meat layer is also an emulsion and includes the following ingredients: Water, mushroom (*Pleorotus ostreatus*)*,* starch, texturized pea protein, oil, salt, natural flavors, preservative, potato protein, carrageenan, natural colorants, and konjac gum. *Pleurotus ostreatus* has been used as a second ingredient to investigate the development of new fungi-based products, and it works as a component with a high nutritional value due to its protein content (30%) and the low amount of carbohydrates and fats. Tests were carried out with the mushroom in various formats: dehydrated powder, whole dehydrated, rehydrated, and fresh mushroom. Although at the beginning it was thought that the dehydrated mushroom powder would work better on an industrial scale, the truth is that both in cost and at a functional level in the product, it did not offer the expected characteristics.

Texturized pea protein provides bite and helps to create a meatier structure in the final product. It requires hydration and, together with the protein isolate, makes up the higher final protein content of the bacon.

The use of a fat helps create the emulsion and form the thin paste for the muscle analogue layer, to which it provides a certain stability. After several tests (carried out on the fat layer), olive oil was chosen as the fat to be used. The emulsion formed is gelled and stabilized by the addition of starch and hydrocolloid, so that after the appropriate thermal and hydration process, the viscosity and elasticity of the gel are increased. The order of addition of these two ingredients together with the protein affects the properties of the final product since the amount of water is very limited and all of them need a correct hydration to be able to fulfill their techno-functional characteristics in the final product. The salt, in addition to flavor, is compatible with the hydrocolloid and helps to finish forming the gel by increasing the ionic charge that allows the interaction between macromolecules without precipitation occurring.

Example formulations that have been developed are shown below, together with the associated percentages (by weight of the muscle analogue composition).

| **Table 11- SAMPLE A** | |
|---|---|
| | **TOTAL** |
| 77.00% | Fresh Butter mushroom (*Agaricus bisporus*) |
| 13.00% | Textured pea protein |
| 3.00% | Primary grown yeast extract |
| 2.00% | Salt |
| 5.00% | Extra virgin olive oil (EVOO) |
| **100.00%** | **TOTAL** |

Sample A formed an oxidized mass, brown in color, and failed to form a gel. It is viscous. It was not able to be included in a sliced bacon analogue and cooked because of its fluid texture.

| **Table 12** - **SAMPLE B** - **no potato protein** | |
|---|---|
| | **TOTAL** |
| 23.76% | Fresh Butter mushroom (*Agaricus bisporus*) |
| 12.20% | Textured thin soy protein |
| 20.81% | Corn starch |
| 27.57% | Water |
| 2.50% | Salt |
| 6.36% | EVOO |
| 1.27% | Ascorbic Acid |
| 1.06% | Konjac gum |
| 1.06% | Agar |
| 1.40% | Natural colorants |
| 2.01% | Flavorings |
| **100.00%** | **TOTAL** |

Sample B was less sticky than Sample A both raw and fried but stickier than the one without konjac and agar. More elastic than Sample A.

| **Table 13** - **SAMPLE C - no konjac gum and no agar** | |
|---|---|
| | **TOTAL** |
| 23.76% | Fresh Butter mushroom (*Agaricus bisporus*) |
| 12.20% | Textured thin soy protein |
| 20.81% | Corn starch |
| 28.00% | Water |
| 2.50% | Salt |
| 1.61% | Flavorings |
| 6.36% | EVOO |
| 1.27% | Ascorbic Acid |
| 2.09% | Potato protein |
| 1.40% | Natural colorants |
| **100.00%** | **TOTAL** |

Sample C was less sticky than Sample A both raw and fried. Less elastic than Sample A but still elastic. The dough was surprisingly compact without texturizers.

| **Table 14 - SAMPLE D** - **tapioca starch** | |
|---|---|
| | **TOTAL** |
| 23.76% | Fresh Butter mushroom (*Agaricus bisporus*) |
| 10.60% | Textured thin soy protein |
| 20.81% | Tapioca starch |
| 27.57% | Water |
| 1.70% | Potato protein |
| 2.50% | Salt |
| 1.91% | Flavorings |
| 6.36% | EVOO |
| 1.06% | Konjac gum |
| 1.06% | Agar |
| 1.27% | Ascorbic Acid |
| 1.40% | Natural colorants |
| **100.00%** | **TOTAL** |

Sample D was sticky in the raw state. Chewier than cornstarch, it gives an impression of chewiness more similar to meat.

| **Table 15** - **SAMPLE** E - **dehydrated mushrooms** | |
|---|---|
| | **TOTAL** |
| 50.00% | Water |
| 15.00% | Dehydrated mushroom (*Auricularia auricula-judae*) |
| 8.00% | Potato protein |
| 7.00% | Texturized pea protein |
| 5.00% | Almidón |
| 2.50% | Carrageenan |
| 2.40% | Salt |
| 6.36% | (Virgin olive oil) VOO |
| 1.06% | Konjac gum |
| 1.06% | Agar |
| 1.62% | Flavorings |
| **100.00%** | **TOTAL** |

The final Sample E product is elastic, it has formed a homogeneous gel binding the mushrooms and the rest of the dough. It can be easily cut and sliced. In the pan frying it becomes crispy and tasty. The next steps will be to try the same process but with *Pleurotus ostreatus* instead of the *Auricularia auricula-judae.*

| **Table 16** - **SAMPLE F** - **dehydrated mushroom & tapioca** | |
|---|---|
| | **TOTAL** |
| 45.90% | Water |
| 20.00% | Dehydrated mushroom |
| 5.00% | Textured pea protein |
| 20.00% | tapioca |
| 5.00% | VOO |
| 1.50% | Carrageenan |
| 2.60% | Salt |
| **100.00%** | TOTAL |

Sample F was excessively crunchy, and had the appearance of a cookie, presumably due to the high amount of tapioca starch.

| **Table 17** - **SAMPLE G** | |
|---|---|
| | **TOTAL** |
| 25.11% | Fresh *Pleurotus ostreatus* |
| 11.30% | Textured pea protein |
| 15.00% | Tapioca starch |
| 28.12% | Water |
| 1.63% | Potato protein |
| 2.80% | Salt |
| 6.12% | VOO |
| 1.02% | Konjac gum |
| 1.50% | Carrageenan |
| 1.40% | Natural colorants |
| 2.00% | Preservative |
| 4.00% | Flavorings |
| **100.00%** | **TOTAL** |

Sample G was weak, dry and the color is still dark

| **Table 18-SAMPLE H** | |
|---|---|
| | **TOTAL** |
| 30% | Fresh *Pleurotus ostreatus* |
| 0% | Textured pea protein |
| 0% | Tapioca starch |
| 33% | Water |
| 15% | pea protein |
| 2.80% | Salt |
| 10% | VOO |
| 1.20% | Konjac gum |
| 1.50% | Carrageenan |
| 2.17% | Natural colorants |
| 2.00% | Preservative |
| 2.33% | Flavorings |
| **100.00%** | **TOTAL** |

Sample H was hot and cold mixed. When cold, it is very chewy/gel-like and lacks fibrousness and lean texture - which can probably be provided by starch or texturizer. Hot blending DOES NOT WORK WELL, it falls apart when cooked in a frying pan.

| **Table 19 - SAMPLE I** | |
|---|---|
| | **TOTAL** |
| 25.11% | Fresh *Pleurotus ostreatus* |
| 11.3% | Textured pea protein |
| 15% | Tapioca starch |
| 31.42% | Water |
| 0% | pea protein |
| 2.80% | Salt |
| 6.12% | VOO |
| 1.20% | Konjac gum |
| 1.50% | Carrageenan |
| 1.4% | Natural colorants |
| 2.00% | Preservative |
| 2.15% | Flavorings |
| **100.00%** | **TOTAL** |

Sample 19 shows good results both in cold and in frying pan. It is elastic, does not break, and withstands a wide temperature range.

| **Table 20** - **SAMPLE J** | |
|---|---|
| | **TOTAL** |
| 25.11% | Fresh *Pleurotus ostreatus* |
| 11.3% | Textured pea protein |
| 7.04% | Tapioca starch |
| 36.12% | Water |
| 0% | pea protein |
| 2.80% | Salt |
| 10% | VOO |
| 1.20% | Konjac gum |
| 1.50% | Carrageenan |
| 1.4% | Natural colorants |
| 2.00% | Preservative |
| 1.53% | Flavorings |
| **100.00%** | **TOTAL** |

Sample J was raw (like pâté). The % of starch would have to be increased so the protein or mushroom content would have to be reestablished instead of water.

| **Table 21 - SAMPLE K** | |
|---|---|
| | **TOTAL** |
| 26.6% | Fresh *Pleurotus ostreatus* |
| 10% | Textured pea protein |
| 3% | Tapioca starch |
| 36.32% | Water |
| 10% | pea protein |
| 2.80% | Salt |
| 8% | VOO |
| 0.6% | Konjac gum |
| 0.8% | Carrageenan |
| 1.9% | Natural colorants |
| 2.00% | Preservative |
| 2.3% | Flavorings |
| **100.00%** | **TOTAL** |

Sample K was wet dough, not homogeneous, and easy to handle. When cooking, it sticks to the pan, so it is concluded that the starch content must be increased because the result is very doughy.

| **Table 22 - SAMPLE L** | |
|---|---|
| | **TOTAL** |
| 25.11% | Fresh *Pleurotus ostreatus* |
| 11.3% | Textured pea protein |
| 15% | Tapioca starch |
| 34.42% | Water |
| 0% | pea protein |
| 2.8% | Salt |
| 3.12% | VOO |
| 0.6% | Konjac gum |
| 0.8% | Carrageenan |
| 2.4% | Natural colorants |
| 1.92% | Preservative |
| 2.53% | Flavorings |
| **100.00%** | **TOTAL** |

Sample L showed good results both cold and cooked. The texture is elastic and when cooked it presents the typical crunchiness of bacon.

During the experimental tests, it was seen that high amounts of oil and pea protein in the formula had an artificial effect on the bite of the final product, considering it as a gel that was too sandy and brittle and not at all similar to a meat of animal origin. Therefore, after a series of trials and analysis, the muscle analogue was obtained in the range of % as shown in Table 23:

| **Table 23** | |
|---|---|
| | **TOTAL** |
| 20-26% | Fresh *Pleurotus ostreatus* |
| 6-12% | Textured pea protein |
| 10-16% | Tapioca starch |
| 35-41% | Water |
| 0-6% | pea protein |
| 0.05 -2.5% | Salt |
| 0-6% | VOO |
| 0.5-2% | Konjac gum |
| 0.52% | Carrageenan |
| 1-1.4% | Natural colorants |
| 1-2% | Preservative |
| 1.5-2% | Flavorings |
| **100.00%** | **TOTAL** |

This % made a muscle analogue firm, with good texture, and meaty. It is easier to handle, less brittle but not too "gelatinous" in texture, the balance is very good.

The Sample from Table 23 was made by the following process:
- Hydrate the textured protein.
- Mix hydrated texture protein and fresh mushrooms and grind them in a blender.
- Add, previously homogenized, starch, isolate protein, salt, gums, colorings, and solid flavors, and grind them in a blender.
- Add liquid flavorings, oil, and the preservative to the mixture and grind them in a blender.

The bacon product is molded in such a way that the layers of fat (layer between 30-50% of the total product) and meat (layer between 70-50% of the total product) alternate in the mold. The following steps were carried out:
1. Put the first layer of muscle analogue gel precursor emulsion in a mold or tray and spread it to cover it homogeneously.
2. On top, put the first fat analogue gel precursor emulsion layer and spread it to cover it homogeneously.
3. Spread another meat gel precursor emulsion layer and spread it to cover it homogeneously.
4. Finally, add the last fat gel precursor emulsion layer and spread it to cover it homogeneously.
5. Close the mold or tray then press and place the temperature probe in the mold hold settled for this purpose.
6. Put the tray or mold in a combi oven and cook the product at 85°C (internal temperature of the product), keeping the humidity at 100% between 10 to 30 minutes (no need to remove the probe). Cool down and refrigerate at 4° C for 12 hours minimum.
7. Slice the bacon in a slicing machine.

The following procedure was used to cook the sliced bacon: put oil into a cooking pan and wait for it to get medium hot. Sizzle the bacon for about 2-3 minutes on each side. Avoid burning. Once cooked, remove from the heat, let cool for 30 seconds and serve. The sliced bacon made with the muscle analogue from Table 23 and fat analogue from Table 10 had the following beneficial properties:
- Made from natural ingredients.
- Free of allergens.
- Low in fat relative to animal-based bacon and other bacon analogues (see Table 18, Table 19, and Table 20).
- According to EU regulation is a food product with the following characteristics: Low energy value, Low saturated fat content, No added sugars, Source of protein, Source of fiber, naturally gluten-free, soy-free and cholesterol-free.

**TABLE 24: Nutritional facts of bacon analogue embodiment made with the muscle analogue from table 23 and the oleogel fat from Table 10:**

| **NUTRITIONAL FACTS** | | per **100 g** |
|---|---|---|
| Calories (kJ / kcal) | | 378 kJ / 96 kcal |
| Total fat | | 3.78 |
| | • Saturated fat | 0.6 g |
| | • Monounsaturated fatty acids | 2.74 g |
| | • Polyunsaturated fatty acids | 0.69 g |
| Total Carbohydrate | | 12.05 g |
| | • Total sugars | 0,25 g |
| Fiber | | 2,78 g |
| Protein | | 4.72 g |
| Salt | | 1,45 g |

**TABLE 25 - Nutritional facts of common animal-based bacon:**

| **NUTRITIONAL FACTS** | | per **100** g |
|---|---|---|
| Calories (kJ / kcal) | | 1214 kJ / 293 kcal |
| Total fat | | 25 g |
| | • Saturated fat | 9g |
| Total Carbohydrate | | 2 g |
| | • Total sugars | 2 g |
| Fiber | | 0 g |
| Protein | | 15 g |
| Salt | | 2.4 g |

**TABLE 26 - Nutritional facts of vegan bacon La Vie:**

| **NUTRITIONAL FACTS** | | per **100 g** |
|---|---|---|
| Calories (kJ / kcal) | | 942 kJ / 227 kcal |
| Total fat | | 16.8 g |
| | • Saturated fat | 1.3 g |
| Total Carbohydrate | | 5.4 g |
| | • Total sugars | 1 g |
| Fiber | | 2.6 g |
| Protein | | 14.9 g |
| Salt | | 2.1 g |

## Claims

1. An oleogel composition **characterized in that** it comprises:
(a) a continuous gel phase comprising water, a starch source, and a non-starch polysaccharide source; and
(b) a discontinuous oil phase comprising an oil.

2. The oleogel composition of claim 1, wherein the non-starch polysaccharide source is one source of the group formed by konjac gum, carrageenan, agar-agar, alginate and mixtures thereof.

3. The oleogel composition of any one of claims 1 or 2, wherein the oil phase comprises no more than 20% by weight of the oleogel and, preferably, comprises from 5 to 20% by weight of the oleogel.

4. The oleogel composition of any one of claims 1 to 3, wherein the non-starch polysaccharide source is 0.5 to 4% by weight of the oleogel.

5. The oleogel composition of any one of claims 1 to 4, wherein the non-starch polysaccharicde source comprises alginate.

6. The oleogel composition of any one of claims 1 to 5, wherein the starch source comprises 1 to 15% by weight of the oleogel.

7. A meat analogue comprising the oleogel of any one of claims 1 to 6.

8. The meat analogue of claim 7, wherein the meat analogue comprises an animal fat analogue layer comprising the oleogel.

9. The meat analogue of claim 7 or 8, wherein the meat analogue further comprises a muscle analog layer.

10. The meat analogue of any one of claims 7 to 9, wherein the muscle analogue layer comprises mushroom preferably fresh mushroom.

11. The meat analogue of any one of claims 7 to 10, wherein the muscle analogue layer further comprises one or more protein sources where, preferably the one or more protein sources comprise textured protein and more preferably the textured protein is textured pea protein.

12. The meat analogue of any one of claims 7 to 11, wherein the muscle analogue layer further comprises a starch source where, preferably, the starch source is one of group formed by tapioca starch, corn starch and mixtures thereof.

13. The meat analogue of any one of claims 7 to 12, wherein the muscle analogue layer further comprises a non-starch polysaccharide source where, preferably the non-starch polysaccharide source is one of the group formed by konjac gum, carrageenan and mixtures thereof.

14. A method of making an oleogel composition according to any one of claims 1 to 6, the method comprising:
(a) stirring a homogenous powder comprising the non-starch polysaccharide source into water until the powder is hydrated;
(b) stirring the starch source into the mixture formed in step (a) until the starch source is hydrated;
(c) stirring the oil of the discontinuous oil phase into the mixture formed in step (b) to create a homogeneous emulsion; and
(d) cooling the homogeneous emulsion to set, thereby forming the oleogel composition.

15. The method of claim 14, wherein the water of step (a) is at a temperature below 8° C and, preferably, wherein the temperature of the water is maintained below 8° C throughout steps (a) through (c).
